# EUROPÄISCHE PATENTANMELDUNG

(11) **EP 2 786 929 A1**
(43) Veröffentlichungstag der Anmeldung: **08.10.2014**
(21) Anmeldenummer: 14154941.0
(22) Anmeldetag: 13.02.2014
(51) Int. Cl.: B62M 7/12, B62M 6/60

(54) **Radnabenmotor für Fahrzeug**

(30) Priorität: 05.04.2013 DE 102013206083
(71) Anmelder: Robert Bosch GmbH, 70442 Stuttgart (DE)
(72) Erfinder: Schneider, Thomas, 97631 Bad Koenigshofen (DE)

(57) **Zusammenfassung**

Die vorliegende Erfindung betrifft ein Fahrzeug, insbesondere mit Muskelkraft betreibbares Fahrzeug, insbesondere Elektrofahrrad, umfassend wenigstens einen elektrischen Antrieb (2), wenigstens ein anzutreibendes Rad (3), und ein zwischen dem elektrischen Antrieb (2) und dem anzutreibenden Rad (3) angeordnetes Getriebe (4), wobei das Getriebe (4) ein Kegelradgetriebe mit einem Tellerrad (5) und einem Ritzel (6) ist, und der elektrische Antrieb (2) das Ritzel (6) antreibt.

## Beschreibung

### Stand der Technik

Die vorliegende Erfindung betrifft ein insbesondere mittels Muskelkraft betreibbares Fahrzeug, insbesondere ein elektrisches Zweirad, z.B. ein Elektrofahrrad, mit einem verbesserten Radnabenmotor.

Elektrofahrräder mit Radnabenmotoren sind aus dem Stand der Technik in unterschiedlichen Ausgestaltungen bekannt. Hierbei sind insbesondere Radnabenmotoren bekannt, deren Drehzahl einer Drehzahl des Rades des Fahrrads entspricht. Da eine axiale Motorlänge bei dieser Antriebsart begrenzt ist, werden Elektromotoren mit relativ hoher Polpaarzahl benötigt, um das Antriebsmoment durch radiale Volumenausnutzung zu erzeugen. Von daher sind die bekannten Radnabenmotoren relativ klobig und weisen einen großen Durchmesser auf. Weiterhin ist es bekannt, bei Radnabenmotoren ein Planetenradgetriebe zu verwenden, um eine Übersetzung zwischen dem elektrischen Antrieb und dem Rad zu erreichen. Hierbei liegt jedoch auch eine Abtriebswelle des elektrischen Antriebs parallel zu einer Radwelle, wodurch sich ebenfalls große Einschränkungen in einer axialen Ausdehnung des elektrischen Antriebs ergeben. Es wäre daher wünschenswert, einen verbesserten elektrischen Antrieb zu haben.

### Offenbarung der Erfindung

Das erfindungsgemäße, mit Muskelkraft betreibbare Fahrzeug, insbesondere Elektrofahrrad, mit den Merkmalen des Anspruchs 1, weist demgegenüber den Vorteil auf, dass zwischen einem elektrischen Antrieb und einem anzutreibenden Rad des Fahrzeugs ein Getriebe angeordnet werden kann, welches sehr kleinbauend und robust ist. Darüber hinaus ist das erfindungsgemäße Getriebe leicht und weist einen guten Wirkungsgrad auf. Ferner ermöglicht das erfindungsgemäße Getriebe, dass ein elektrischer Antrieb mit einer hohen Drehzahl betrieben werden kann, so dass die Abmessungen des elektrischen Antriebs deutlich reduziert werden können. Dies wird erfindungsgemäß dadurch erreicht, dass zwischen dem elektrischen Antrieb und dem Rad ein Kegelradgetriebe mit einem Tellerrad und einem Ritzel angeordnet ist. Das Ritzel ist dabei mit einer Abtriebswelle des elektrischen Antriebs verbunden, so dass der elektrische Antrieb das Ritzel antreibt. Somit kann der erfindungsgemäße elektrische Antrieb insbesondere in eine Radnabe integriert werden.

Die Unteransprüche zeigen bevorzugte Weiterbildungen der Erfindung.

Vorzugsweise ist das Tellerrad des Kegelradgetriebes mit einer Nabe des Rads verbunden und der elektrische Antrieb ist vollständig in der Nabe angeordnet. Dadurch kann eine sehr gute Abkapselung des elektrischen Antriebs und des Getriebes erreicht werden.

Vorzugsweise ist eine Abtriebswelle des elektrischen Antriebs senkrecht zu einer Nabenachse angeordnet. Hierdurch ist es insbesondere möglich, dass der elektrische Antrieb innerhalb des Tellerrads des Kegelradgetriebes angeordnet ist.

Gemäß einer alternativen Ausgestaltung der vorliegenden Erfindung ist die Abtriebswelle des elektrischen Antriebs parallel zu einer Nabenachse angeordnet. Hierdurch ist es insbesondere möglich, dass der elektrische Antrieb eine Länge entsprechend einer Radnabe aufweist.

Gemäß einer weiteren bevorzugten Ausgestaltung der vorliegenden Erfindung umfasst das Fahrzeug ferner einen zweiten elektrischen Antrieb. Der zweite elektrische Antrieb kann beispielsweise ein zusätzlicher Mittelmotor sein, welcher an einem Tretlager des Fahrzeugs angeordnet ist, oder alternativ ein zweiter Radnabenantrieb, welcher an einem anderen Rad als der erste Radnabenantrieb angeordnet ist.

Weiter bevorzugt ist der zweite elektrische Antrieb vollständig in der gleichen Nabe wie der erste elektrische Antrieb angeordnet.

Besonders bevorzugt treiben dabei der erste und der zweite elektrische Antrieb ein gemeinsames Tellerrad des Kegelradgetriebes an. D.h., das Fahrzeug umfasst zwei elektrische Antriebe und ein Kegelradgetriebe, welches von beiden elektrischen Antrieben angetrieben wird. Alternativ umfasst das Fahrzeug zwei elektrische Antriebe und zwei Kegelradgetriebe, welche beide in einer gemeinsamen Nabe angeordnet sind. Die beiden elektrischen Antriebe sind vorzugsweise ebenfalls vollständig in der gemeinsamen Nabe angeordnet.

Besonders bevorzugt ist dabei ein erstes Tellerrad des ersten Kegelradgetriebes an einem ersten Ende der Nabe angeordnet und ein zweites Tellerrad des zweiten Kegelradgetriebes an einem zweiten Ende der Nabe angeordnet.

Weiter bevorzugt umfasst das Kegelradgetriebe eine Geradverzahnung oder eine Bogenverzahnung. Alternativ ist das Kegelradgetriebe als Hypoidgetriebe ausgebildet, bei dem die Achsen des Tellerrads und des Ritzels zueinander versetzt sind und sich nicht schneiden.

Weiter bevorzugt liegt eine Übersetzung des Kegelradgetriebes in einem Bereich von 1 : 20 bis 1 : 30.

Die Verwendung eines Kegelradgetriebes hat gegenüber den bekannten Planetenradgetrieben den Vorteil, dass eine relativ große Übersetzung von bis zu 1 : 30 möglich ist. Dadurch kann eine Drehzahl des elektrischen Antriebs deutlich erhöht werden, was zu einer kleinen Bauform des elektrischen Antriebs und einer Gewichtseinsparung führt.

Vorzugsweise ist der elektrische Antrieb innerhalb des Tellerrads des Kegelradgetriebes angeordnet. Mit anderen Worten ist ein Innendurchmesser der Verzahnung des Tellerrads des Kegelradgetriebes größer als eine axiale Länge des elektrischen Antriebs. Dadurch kann ein besonders kompakter Aufbau realisiert werden.

Weiter bevorzugt ist das Kegelradgetriebe an einer Außenseite einer Nabe des Fahrzeugs angeordnet und der elektrische Antrieb an einer Strebe oder dgl. des Fahrzeugs angeordnet. Bevorzugt sind dabei der elektrische Antrieb und das Kegelradgetriebe in einem gemeinsamen Gehäuse angeordnet. Die äußere Anordnung des Kegelradgetriebes hat insbesondere Vorteile bei Wartungsarbeiten. Besonders bevorzugt ist die Strebe, an welcher der elektrische Antrieb angeordnet ist, dabei eine Schwinge eines Fahrzeugs. Weiter bevorzugt weist das erfindungsgemäße Fahrzeug zwei elektrische Antriebe und zwei Kegelradgetriebe auf, wobei die beiden Kegelradgetriebe jeweils an einer Seite außerhalb der Nabe des Fahrzeugs angeordnet sind. Hierbei können die beiden elektrischen Antriebe beispielsweise an einer gabelförmigen Strebe eines Hinterrads des Fahrzeugs angeordnet werden.

Das erfindungsgemäße Fahrzeug ist vorzugsweise ein Elektrofahrrad. Vorzugsweise sind der elektrische Antrieb und das Getriebe in einer Hinterradnabe des Elektrofahrrads angeordnet.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Darstellung eines Fahrzeugs gemäß einem ersten Ausführungsbeispiel der Erfindung,
- Figur 2: eine schematische Querschnittsansicht einer Nabe des Fahrzeugs von Figur 1,
- Figur 3: eine schematische Längsschnittansicht der Nabe des Fahrzeugs von Figur 1,
- Figur 4: eine schematische Längsschnittansicht einer Nabe gemäß einem zweiten Ausführungsbeispiel der Erfindung,
- Figur 5: eine schematische Längsschnittansicht einer Nabe gemäß einem dritten Ausführungsbeispiel der Erfindung,
- Figur 6: eine schematische Längsschnittansicht einer Nabe gemäß einem vierten Ausführungsbeispiel der Erfindung,
- Figur 7: eine schematische Ansicht eines Fahrzeugs gemäß einem fünften Ausführungsbeispiel der Erfindung, und
- Figur 8: eine schematische Schnittansicht eines Fahrzeugs gemäß einem sechsten Ausführungsbeispiel der Erfindung.

### Bevorzugte Ausführungsformen der Erfindung

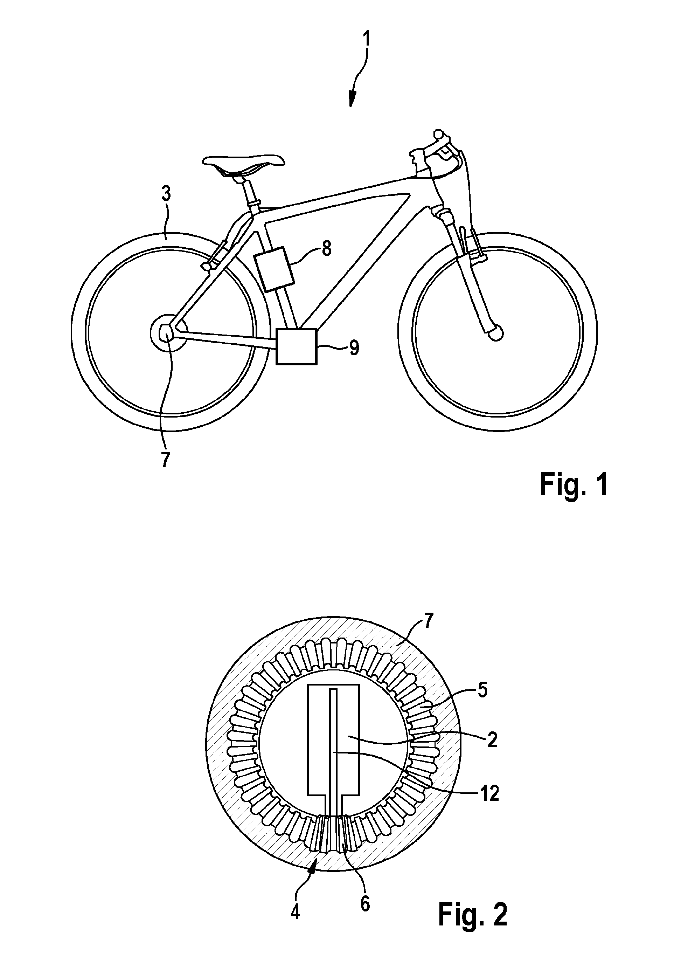

Nachfolgend wird unter Bezugnahme auf die Figuren 1 bis 3 ein mit Muskelkraft betreibbares Fahrzeug 1, welches in diesem Ausführungsbeispiel ein Elektrofahrrad ist, im Detail beschrieben.

Wie aus Figur 1 ersichtlich ist, umfasst das Elektrofahrrad ein Hinterrad 3, welches in diesem Ausführungsbeispiel das anzutreibende Rad des Fahrrads ist. Am Hinterrad 3 ist eine Nabe 7 vorgesehen. Das Elektrofahrrad dieses Ausführungsbeispiels umfasst ferner noch einen elektrischen Mittelmotorantrieb 9, welcher im Bereich des Tretlagers des Fahrrads angeordnet ist. Das Bezugszeichen 8 bezeichnet eine Batterie zur Stromversorgung des Mittelmotorantriebs 9 sowie auch anderer elektrischer Verbraucher, welche nachfolgend im Detail beschrieben werden.

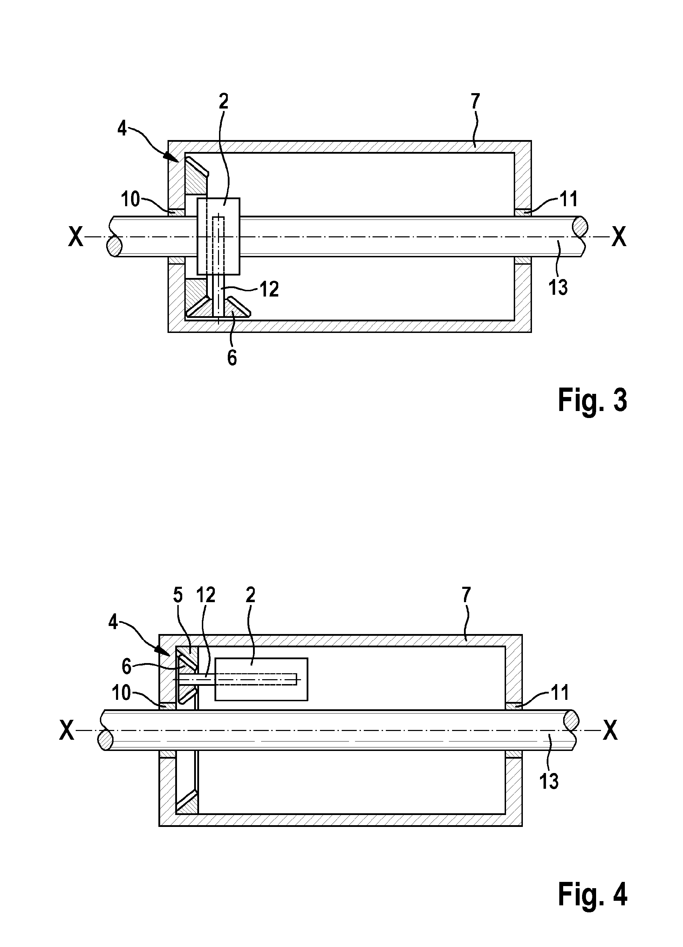

Wie aus den Figuren 2 und 3 ersichtlich ist, umfasst das Elektrofahrrad des ersten Ausführungsbeispiels einen weiteren elektrischen Antrieb 2, welcher vollständig in der Nabe 7 angeordnet ist. Zwischen dem elektrischen Antrieb 2 und dem anzutreibenden Hinterrad 3 ist ein Getriebe 4 angeordnet.

Wie aus Figur 2 ersichtlich ist, ist das Getriebe 4 dieses Ausführungsbeispiels ein Kegelradgetriebe mit einem Tellerrad 5 und einem Ritzel 6. Das Tellerrad 5 ist dabei mit der Nabe 7 verbunden und das Ritzel 6 wird durch eine Abtrieswelle 12 des elektrischen Antriebs 2 angetrieben.

Das Gehäuse des elektrischen Antriebs 2 ist mit einer feststehenden Welle 13 verbunden, an welcher nicht gezeigte Gabeln des Fahrrads angeordnet sind. Die Nabe 7 ist dabei über ein erstes Lager 10 und ein zweites Lager 11 an der feststehenden Welle 3 gelagert.

Das als Kegelradgetriebe ausgebildete Getriebe 4 weist dabei eine hohe Übersetzung von mindestens 1 : 20 auf. Dadurch kann der elektrische Antrieb mit hoher Drehzahl betrieben werden und relativ kleinbauend sein. Dadurch ergibt sich auch eine Gewichtsersparnis. Ferner ermöglicht die vollständige Anordnung des elektrischen Antriebs 2 im Inneren der Nabe 7 eine gute Abkapselung des elektrischen Antriebs 2 und des Getriebes 4. Ein weiterer Vorteil des Kegelradgetriebes ist dessen relativ hoher Wirkungsgrad. Der elektrische Antrieb 2 ist ebenfalls mit der Batterie 8 zur Stromversorgung verbunden.

Eine Verzahnung des Getriebes kann als Geradverzahnung oder als Schrägverzahnung ausgebildet sein.

Der elektrische Antrieb 2 ist im ersten Ausführungsbeispiel derart angeordnet, dass die Abtriebswelle 12 senkrecht zu einer Nabenachse X-X der Nabe 7 angeordnet ist. Somit ist es bei dieser Anordnung möglich, einen elektrischen Antrieb 2 mit einem Durchmesser entsprechend einer Nabenbreite und einer Länge entsprechend einem Nabendurchmesser zu verwenden. Dadurch ist der elektrische Antrieb 2 vollständig innerhalb des Tellerrads 5 angeordnet.

Figur 4 zeigt eine Nabe 7 mit integriertem elektrischem Antrieb 2 gemäß einem zweiten Ausführungsbeispiel der Erfindung. Wie aus Figur 4 ersichtlich ist, ist eine Abtriebswelle 12 des elektrischen Antriebs 2 dabei parallel zu einer Nabenachse X-X der Nabe 7 angeordnet. Ein Gehäuse des elektrischen Antriebs 2 liegt dabei parallel zur feststehenden Welle 13 und kann einfach an dieser befestigt werden. Das Tellerrad 5 ist an einer Innenseite der Nabe 7 angeordnet. Somit sind sowohl das Getriebe 4 als auch der elektrische Antrieb 2 wiederum vollständig innerhalb der Nabe 7 angeordnet.

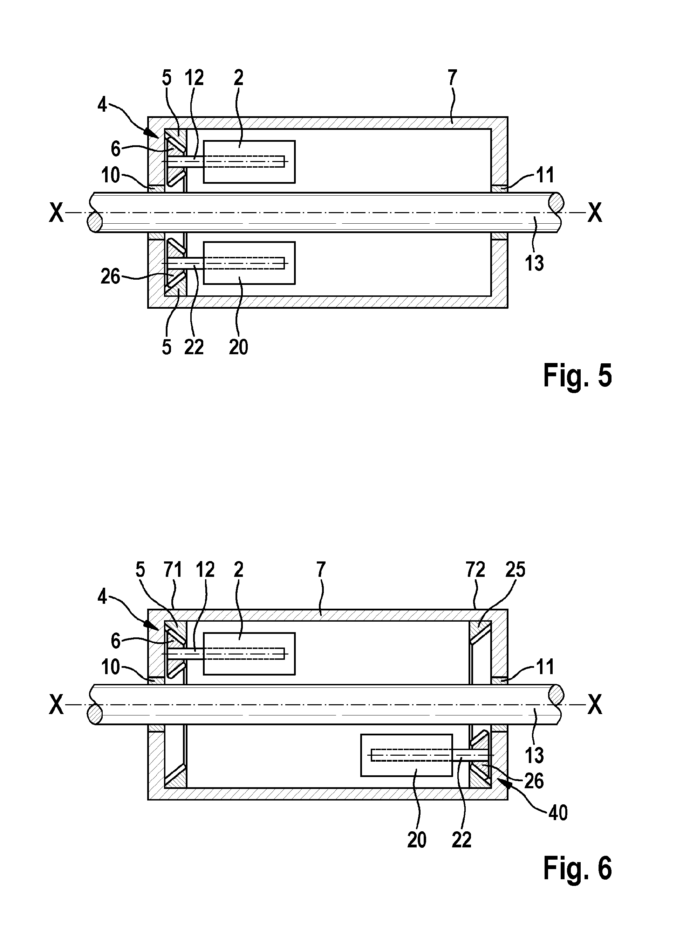

Figur 5 zeigt ein drittes Ausführungsbeispiel der Erfindung, wobei zwei elektrische Antriebe vorgesehen sind. Genauer ist ein erster elektrischer Antrieb 2 und ein zweiter elektrischer Antrieb 20 vorgesehen. Die beiden elektrischen Antriebe 2, 20 sind dabei derart angeordnet, dass die beiden Abtriebswellen 12, 22 der elektrischen Antriebe zueinander parallel sind. In diesem Ausführungsbeispiel sind die beiden Abtriebswellen 12, 22 der elektrischen Antriebe 2, 20 auch parallel zur feststehenden Welle 13. Dabei treibt die Abtriebswelle 12 des ersten elektrischen Antriebs 2 über das Ritzel 6 ein Tellerrad 5 eines Kegelradgetriebes an und eine zweite Abtriebswelle 22 des zweiten elektrischen Antriebs 20 treibt das gleiche Tellerrad 5 über ein Ritzel 26 des Kegelradgetriebes an.

Die beiden elektrischen Antriebe 2, 20 sind dabei relativ zur Mittelachse X-X um 180° einander gegenüberliegend angeordnet. Durch das Vorsehen von zwei elektrischen Antrieben 2, 20 kann eine abgegebene elektrische Leistung verdoppelt werden, ohne dass sich dadurch ein Bauraum erhöht. Der zweite elektrische Antrieb 20 nutzt den noch in der Nabe 7 verbliebenen freien Bauraum aus. Dabei können die beiden elektrischen Antriebe 2, 20 gleich aufgebaut werden, so dass ein besonders kostengünstiger elektrischer Antrieb möglich ist. Ferner sind nur ein gemeinsames Tellerrad 5 und zwei Ritzel 6, 26 zur Übertragung des Antriebsmoments auf die Nabe 7 notwendig.

Figur 6 zeigt ein viertes Ausführungsbeispiel der Erfindung, bei dem ebenfalls ein erster elektrischer Antrieb 2 und ein zweiter elektrischer Antrieb 20 vorgesehen sind. Ferner ist zwischen dem ersten elektrischen Antrieb 2 und der Nabe 7 ein erstes Getriebe 4 mit Tellerrad 5 und Ritzel 6 und zwischen dem zweiten elektrischen Antrieb 20 und der Nabe 7 ein zweites Getriebe 40 mit Tellerrad 25 und Ritzel 26 vorgesehen. Die beiden Getriebe sind gleich aufgebaut und jeweils als Kegelradgetriebe ausgebildet. Dabei sind die beiden Abtriebswellen 12, 22 der beiden elektrischen Antriebe wiederum parallel zueinander. Ferner sind die beiden Abtriebswellen 12, 22 der elektrischen Antriebe 2, 20 parallel zu einer Nabenachse X-X der Nabe 7. Beim vierten Ausführungsbeispiel ist somit eine redundante Anordnung der elektrischen Antriebe 2, 20 und der Getriebe 4, 40 zwischen den elektrischen Antrieben und der Nabe 7 vorhanden. Dabei ist das erste Getriebe 4 an einem ersten Ende 71 der Nabe 7 angeordnet und das zweite Getriebe 40 ist an einem zweiten Ende 72 der Nabe angeordnet.

Aus den beschriebenen Ausführungsbeispielen in den Figuren 1 bis 6 wird deutlich, dass erfindungsgemäß wenigstens ein elektrischer Antrieb und ein als Kegelradgetriebe ausgebildetes Getriebe vollständig im Inneren einer Nabe 7 angeordnet werden können. Insbesondere bei der Verwendung von zwei elektrischen Antrieben 2, 20 kann damit auch ein sehr hohes Antriebsmoment auf die Nabe 7 und über die Nabe 7 auf das anzutreibende Rad 3 eines Fahrzeugs aufgebracht werden. Falls gewünscht, kann zusätzlich noch bei Einsatz in einem Elektrofahrrad ein weiterer elektrischer Antrieb im Bereich der Tretkurbel (Mittelmotorantrieb) angeordnet werden.

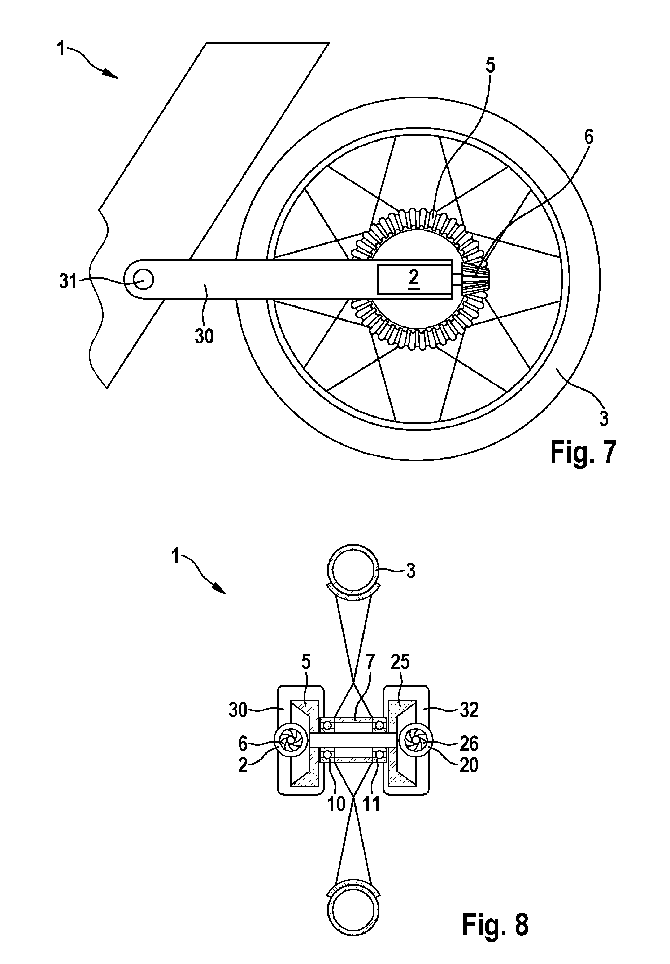

Die Figuren 7 und 8 zeigen weitere bevorzugte Ausführungsbeispiele der Erfindung, wobei bei diesen Ausführungsbeispielen das Kegelradgetriebe außerhalb der Nabe 7 angeordnet ist. Beim fünften Ausführungsbeispiel von Figur 7 ist der elektrische Antrieb 2 dabei an einer Schwinge 30 eines Fahrzeugs, welche um einen Drehpunkt 31 schwingen kann, angeordnet. Dabei ist der elektrische Antrieb 2 wiederum innerhalb des Tellerrads 5 des Kegelradgetriebes angeordnet. Eine Längsachse des elektrischen Antriebs 2 ist dabei senkrecht zu einer Nabenachse. Die Längsachse des elektrischen Antriebs 2 ist im Wesentlichen parallel zur Schwinge 30. Das Kegelradgetriebe 4 und der elektrische Antrieb 2 sind in einem nicht gezeigten Gehäuse angeordnet, um die Bauteile vor Verschmutzung und Beschädigung zu schützen.

Figur 8 zeigt ein Fahrzeug gemäß einem sechsten Ausführungsbeispiel der Erfindung, welches im Wesentlichen dem in Figur 7 gezeigten Ausführungsbeispiel entspricht. Im Unterschied zu dem in Figur 7 gezeigten Ausführungsbeispiel weist das sechste Ausführungsbeispiel von Figur 8 jedoch einen zweiten elektrischen Antrieb 20 und ein zweites Kegelradgetriebe auf. Wie aus Figur 8 ersichtlich ist, ist dabei jeweils ein elektrischer Antrieb mit Kegelradgetriebe an einer Seite der Nabe 7 angeordnet. Die beiden elektrischen Antriebe 2, 20 sind dabei jeweils wiederum an Schwingen 30, 32 angeordnet. Somit sind beide elektrischen Antriebe und beide Kegelradgetriebe außerhalb der Nabe 7 angeordnet. Mit anderen Worten ist der einfach vorhandene elektrische Antrieb nebst Kegelradgetriebe des fünften Ausführungsbeispiels an einer Ebene senkrecht zur Nabe nochmals gespiegelt und somit doppelt vorhanden.

## Patentansprüche

1. Fahrzeug, insbesondere mit Muskelkraft betreibbares Fahrzeug, insbesondere Elektrofahrrad, umfassend:
- wenigstens einen elektrischen Antrieb (2),
- wenigstens ein anzutreibendes Rad (3), und
- ein zwischen dem elektrischen Antrieb (2) und dem anzutreibenden Rad (3) angeordnetes Getriebe (4),
- wobei das Getriebe (4) ein Kegelradgetriebe mit einem Tellerrad (5) und einem Ritzel (6) ist, und der elektrische Antrieb (2) das Ritzel (6) antreibt.

2. Fahrzeug nach Anspruch 1, **dadurch gekennzeichnet, dass** das Tellerrad (5) mit einer Nabe (7) des anzutreibenden Rades (3) verbunden ist.

3. Fahrzeug nach einem der vorhergehenden Ansprüche, **dadurch gekennzeichnet, dass** der elektrisch Antrieb (2) vollständig in der Nabe (7) angeordnet ist.

4. Fahrzeug nach einem der vorhergehenden Ansprüche, **dadurch gekennzeichnet, dass** eine Abtriebswelle (12) des elektrischen Antriebs (2) senkrecht zu einer Nabenachse (X-X) der Nabe (7) angeordnet ist.

5. Fahrzeug nach einem der Ansprüche 1 bis 3, **dadurch gekennzeichnet, dass** die Abtriebswelle (12) des elektrischen Antriebs (2) parallel zu einer Nabenachse (X-X) der Nabe (7) angeordnet ist.

6. Fahrzeug nach einem der vorhergehenden Ansprüche, ferner umfassend einen zweiten elektrischen Antrieb (20).

7. Fahrzeug nach Anspruch 6, **dadurch gekennzeichnet, dass** der zweite elektrische Antrieb (20) vollständig in der Nabe (7) angeordnet ist.

8. Fahrzeug nach Anspruch 6 oder 7, **dadurch gekennzeichnet, dass** der erste elektrische Antrieb (2) und der zweite elektrische Antrieb (20) ein gemeinsames Tellerrad (5) des Getriebes (4) antreiben.

9. Fahrzeug nach Anspruch 6 oder 7, ferner umfassend ein zweites Getriebe (40), welches zwischen dem zweiten elektrischen Antrieb (20) und der Nabe (7) angeordnet ist.

10. Fahrzeug nach Anspruch 9, **dadurch gekennzeichnet, dass** ein erstes Tellerrad (5) des ersten Getriebes (4) an einem ersten Ende (71) der Nabe (7) angeordnet ist und ein zweites Tellerrad (25) des zweiten Getriebes (40) an einem zweiten Ende (72) der Nabe (7) angeordnet ist, wobei der erste elektrische Antrieb (2) das erste Tellerrad (5) mittels eines Ritzels (6) antreibt und der zweite elektrische Antrieb (20) das zweite Tellerrad (25) mittels eines Ritzels (26) antreibt.
